(19) Europäisches Patentamt
European Patent Office
Office européen des brevets

(11) **EP 4 310 738 A1**

(12) **EUROPEAN PATENT APPLICATION**

(43) Date of publication:
**24.01.2024 Bulletin 2024/04**

(21) Application number: **22186047.1**

(22) Date of filing: **20.07.2022**

(51) International Patent Classification (IPC):
***G06N 20/00*** (2019.01)  ***G06N 5/04*** (2023.01)

(52) Cooperative Patent Classification (CPC):
**G06N 5/045; G06N 20/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Infineon Technologies AG**
**85579 Neubiberg (DE)**

(72) Inventors:
• **SERVADEI, Lorenzo**
 **81539 München (DE)**
• **SUN, Huawei**
 **80809 München (DE)**
• **SANTRA, Avik**
 **81541 München (DE)**

(74) Representative: **Kraus & Weisert**
**Patentanwälte PartGmbB**
**Thomas-Wimmer-Ring 15**
**80539 München (DE)**

(54) **TRAINING OF MACHINE-LEARNING ALGORITHM USING EXPLAINABLE ARTIFICIAL INTELLIGENCE**

(57) A training of a machine-learning algorithm (111) is performed. The machine-learning algorithm (111) makes a classification prediction (115) based on a feature vector (101) representing a radar measurement dataset. Weights considered in the training are determined using an explainable artificial-intelligence analysis.

**FIG. 5**

EP 4 310 738 A1

## Description

TECHNICAL FIELD

Various examples of the disclosure generally relate to making classification predictions based on radar measurement datasets using a machine-learning algorithm. Various examples specifically relate to aspects of training the machine-learning algorithm.

BACKGROUND

Machine-learning (ML) algorithms are widely used to make predictions. For instance, hidden observables of a measurement can be revealed by processing a respective measurement dataset. One specific field where ML algorithms find application is to make predictions based on radar measurement datasets that are acquired using a radar measurement. For instance, classification predictions, e.g., for people counting or gesture classification, can be implemented using ML algorithms.
Examples are disclosed here: Santra, A., Hazra, S. (2020). Deep Learning Applications of Short-Range Radars. United Kingdom: Artech House.

SUMMARY

There is a need for techniques which facilitate making accurate predictions using ML algorithms, specifically based on radar measurement datasets.
This need is met by the features of the independent claims. The features of the dependent claims define embodiments.
It is to be understood that the features mentioned above and those yet to be explained below may be used not only in the respective combinations indicated, but also in other combinations or in isolation without departing from the scope of the invention.

BRIEF DESCRIPTION OF THE DRAWINGS

FIG. 1 schematically illustrates a system including a radar sensor and a processing device according to various examples.

FIG. 2 schematically illustrates details of the processing device according to various examples.

FIG. 3 schematically illustrates multiple candidate classes of a gesture classification task according to various examples.

FIG. 4 schematically illustrates a range and Doppler time series for a certain gesture according to various examples.

FIG. 5 schematically illustrates a processing pipeline including an ML algorithm making classification predictions based on radar measurement data sets according to various examples.

FIG. 6 is a flowchart of a method according to various examples.

FIG. 7 is a flowchart of a method according to various examples.

FIG. 8 schematically illustrates a processing pipeline for determining weights associated with training feature vectors of a training dataset according to various examples.

FIG. 9 schematically illustrates a processing pipeline for training an ML algorithm according to various examples.

FIG. 10 is a flowchart of a method according to various examples.

FIG. 11 schematically illustrates applying a data transformation to a range-Doppler image according to various examples.

FIG. 12 schematically illustrates applying a data transformation to a range-Doppler image according to various examples.

FIG. 13 schematically illustrates positions of training feature vectors in a respective vector space for multiple training datasets according to various examples.

FIG. 14 schematically illustrates joint training based on multiple training data sets according to various examples.

DETAILED DESCRIPTION OF THE DRAWINGS

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, examples of the disclosure will be described in detail with reference to the accompanying drawings. It is to be understood that the following description of examples is not to be taken in a limiting sense. The scope of the disclosure is not intended to be limited by the examples described hereinafter or by the drawings, which are taken to be illustrative only.

The drawings are not to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connections or coupling. A coupling between components may also be established over a wireless connection. Functional blocks may be implemented in hardware, firmware, software, or a combination thereof.

Various examples of the disclosure generally relate to solving classification tasks using ML algorithms based on radar measurements.

Various classification tasks are conceivable. Examples include people counting. Here, the number of people in a scene is determined; different candidate classes are associated with different people counts. Another example pertains to motion classification. The disclosed techniques can be used to recognize and classify various types of motions. For instance, it would be possible to determine a gesture class of a gesture performed by an object. Different candidate classes pertain to different gestures. Other examples of motion classification would pertain to kick motion classification. Smart Trunk Opener is a concept of opening and closing a trunk or door of a vehicle without using keys, automatic and hands-free. A kick-to-open motion is performed by the user using the foot.

Various techniques disclosed herein employ a radar measurement of a scene including one or more objects - e.g., a hand or finger or handheld object such as a stylus or beacon, or one or more persons - to acquire data based on which the classification prediction can be made. For instance, a short-range radar measurement could be implemented. Here, radar chirps can be used to measure a position of one or more objects in a scene having extents of tens of centimeters or meters.

According to the various examples disclosed herein, a millimeter-wave radar sensor may be used to perform the radar measurement; the radar sensor operates as a frequency-modulated continuous-wave (FMCW) radar that includes a millimeter-wave radar sensor circuit, one or more transmitters, and one or more receivers. A millimeter-wave radar sensor may transmit and receive signals in the 20 GHz to 122 GHz range. Alternatively, frequencies outside of this range, such as frequencies between 1 GHz and 20 GHz, or frequencies between 122 GHz and 300 GHz, may also be used.

A radar sensor can transmit a plurality of radar pulses, such as chirps, towards a scene. This refers to a pulsed operation. In some embodiments the chirps are linear chirps, i.e., the instantaneous frequency of the chirps varies linearly with time.

A Doppler frequency shift can be used to determine a velocity of the target. Measurement data provided by the radar sensor can thus indicate depth positions of multiple objects of a scene. It would also be possible that velocities are indicated.

The radar sensor can output measurement frames. As a general rule, the measurement frames (sometimes also referred to as data frames or physical frames) include data samples over a certain sampling time for multiple radar pulses, specifically chirps. Slow time is incremented from chirp-to-chirp; fast time is incremented for subsequent samples. A channel dimension may be used that addresses different antennas. The radar sensor outputs a time sequence of measurement frames.

Compared to camera-based gesture classification, gesture classification based on a radar measurements can have some advantages such as: invariant to illumination conditions; preserving privacy; capable of capturing subtle gesture motions.

According to various examples, an ML algorithm is employed to make classification predictions based on radar measurement datasets.

An example implementation of the ML algorithm is a neural network algorithm (hereinafter, simply neural network, NN). An NN generally includes a plurality of nodes that can be arranged in multiple layers. Nodes of given layer are connected with one or more nodes of a subsequent layer. Skip connections between non-adjacent layers are also possible. Generally, connections are also referred to as edges. The output of each node can be computed based on the values of each one of the one or more nodes connected to the input. Nonlinear calculations are possible. Different layers can perform different transformations such as, e.g., pooling, max-pooling, weighted or unweighted summing, non-linear activation, convolution, etc. The NN can include multiple hidden layers, arranged between an input layer and an output layer. An example NN is a convolutional NN (CNN). Here, one dimensional (1-D) or two dimensional (2-D) convolutional layers are used, together with other layers. To make a classification prediction, it is possible to use a Softmax classification layer at the output of the NN. Here, a softmax function is used and a cross-entropy loss is typically used during training.

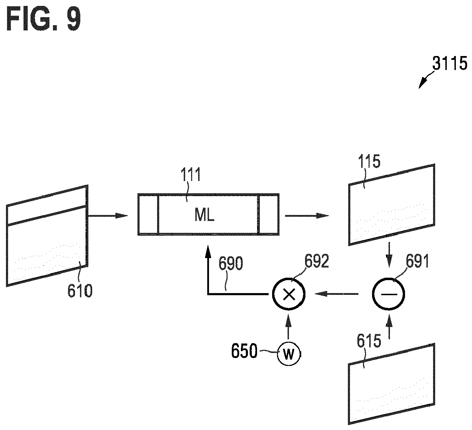

The calculation performed by the nodes are set by respective weights associated with the nodes. The weights can be determined in a training of the NN (details will be described in connection with boxes 3115 and 3215). For this, a numerical optimization can be used to set the weights. A loss function can be defined between an output of the NN and the desired ground truth label, which needed to be minimized during training. (details will be described in connection with FIG. 9). For this, a gradient descent technique may be employed where weights are adjusted from back-to-front of the NN.

According to various examples, different inputs can be considered by the ML algorithm. The type of input data can vary along with the type of ML algorithm; which can vary along with the type of classification prediction made by the ML algorithm. Nonetheless, hereinafter, a few examples of potential input data are disclosed. According to various examples, a range-Doppler-image (RDI) can be provided as an input to the ML algorithm. Doppler-domain filtering can be applied, to yield a micro-motion and macro-motion RDI; one or both of these can serve as an input to the ML algorithm. For instance, it would be possible to perform a Fourier transformation (FT) of the radar measurement data of each measurement frame along a fast-time dimension, to obtain the RDI. According to other examples, a range-elevation-image over a range-azimuthal angle-image can be provided as input to the ML algorithm, i.e., a 2-D angular map. In some examples, the ML algorithm can make the classification prediction based on one or one-dimensional (1-D) time series of respective observables of a radar measurement associated with an object.

Various examples are based on the finding that due to the nature of ML algorithms being black boxes, it is oftentimes difficult to explain why the ML algorithms makes correct or incorrect classification predictions.

To solve this problem, an explainable artificial intelligence (XAI) analysis can be used to make explanations and find the weakness of the ML algorithm. The XAI analysis can be used to configure the training process. This can help to improve the accuracy of the ML algorithm.

Further, various examples are based on the finding that oftentimes the available training dataset is of limited size. Due to the limited amount of training data available, the accuracy of the ML algorithm can be limited. In that case, it will lead to a significant increase in the error rate of the classification prediction.

To mitigate these limitations, according to various examples, the training dataset can be augmented. I.e., based on the available training data, additional training data can be generated. Different options for generating additional training data are possible. For instance, an augmented training dataset can be derived from an initial training dataset. Specifically, it would be possible to apply one or more data operations to training feature vectors of the initial training dataset, to thereby obtain augmented training feature vectors of the augmented training dataset. Furthermore, techniques of federated learning can be employed. Here, additional federated training datasets can be obtained that include observations on previously unseen scenes of deployed sensors. Also this can help to improve the accuracy of the ML algorithm.

Still further, various examples are based on the finding that sometimes re-training a ML algorithm with additional training data can lead to a situation of "forgetting". Here, due to the retraining of the ML algorithm, the prediction accuracy may deteriorate; this is because weights that have been trained in an earlier training run may, at least to some extent, be overwritten by a new training run. To mitigate this, incremental learning is employed. Here, for re-training the ML algorithm, an earlier training dataset and a subsequent training dataset are jointly considered.

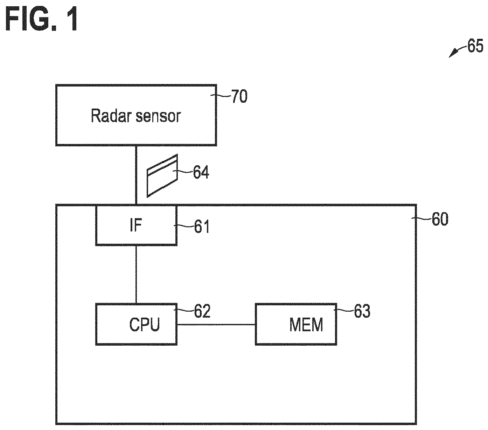

FIG. 1 schematically illustrates a system 65. The system 65 includes a radar sensor 70 and a processing device 60. The processing device 60 can obtain measurement data 64 from the radar sensor 70. For instance, the processing device could be an embedded device, a smartphone, a smart watch, etc..

A processor 62 - e.g., a general purpose processor (central processing unit, CPU), a field-programmable gated array (FPGA), an application-specific integrated circuit (ASIC) - can receive the measurement data 64 via an interface 61 and process the measurement data 64. For instance, the measurement data 64 could include a time sequence of measurement frames, each measurement frame including samples of an ADC converter.

The processor 62 may load program code from a memory 63 and execute the program code. The processor 62 can then perform techniques as disclosed herein, e.g., processing input data using an ML algorithm, making a classification prediction using the ML algorithm, training the ML algorithm, etc.

Details with respect to such processing will be explained hereinafter in greater detail; first, however, details with respect to the radar sensor 70 will be explained.

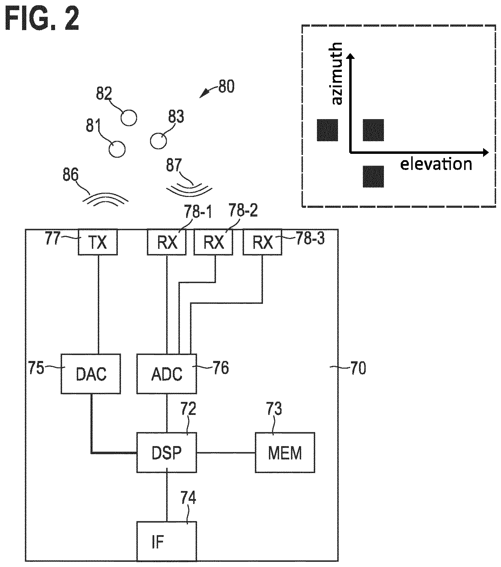

FIG. 2 illustrates aspects with respect to the radar sensor 70. The radar sensor 70 includes a processor 72 (labeled digital signal processor, DSP) that is coupled with a memory 73. Based on program code that is stored in the memory 73, the processor 72 can perform various functions with respect to transmitting radar pulses 86 using a transmit antenna 77 and a digital-to-analog converter (DAC) 75. Once the radar pulses 86 have been reflected by a scene 80, respective reflected radar pulses 87 can be detected by the processor 72 using an ADC 76 and multiple receive antenna 78-1, 78-2, 78-3 (e.g., ordered in a L-shape with half a wavelength distance; see inset of FIG. 2, so that the phase differences between different pairs of the antennas address azimuthal and elevation angles, respectively). The processor 72 can process raw data samples obtained from the ADC 76 to some larger or smaller degree. For instance, measurement frames (sometimes also referred to as data frames or physical frames) could be determined and output.

The radar measurement can be implemented as a basic frequency-modulated continuous wave (FMCW) principle. A frequency chirp can be used to implement the radar pulse 86. A frequency of the chirp can be adjusted between a frequency range of 57 GHz to 64 GHz. The transmitted signal is backscattered and with a time delay corresponding to the distance of the reflecting object captured by all three receiving antennas. The received signal is then mixed with the transmitted signal and afterwards low pass filtered to obtain the intermediate signal. This signal is of significantly lower frequency than that of the transmitted signal and therefore the sampling rate of the ADC 76 can be reduced accordingly. The ADC may work with a sampling frequency of 2 MHz and a 12-bit accuracy.

As illustrated, a scene 80 includes multiple objects 81-83.

Each 1 of these objects 81-83 has a certain distance to the antennas 78-1, 78-2, 78-3 and moves at a certain relative velocity with respect to the sensor 70. These physical quantities define range and Doppler frequency of the radar measurement.

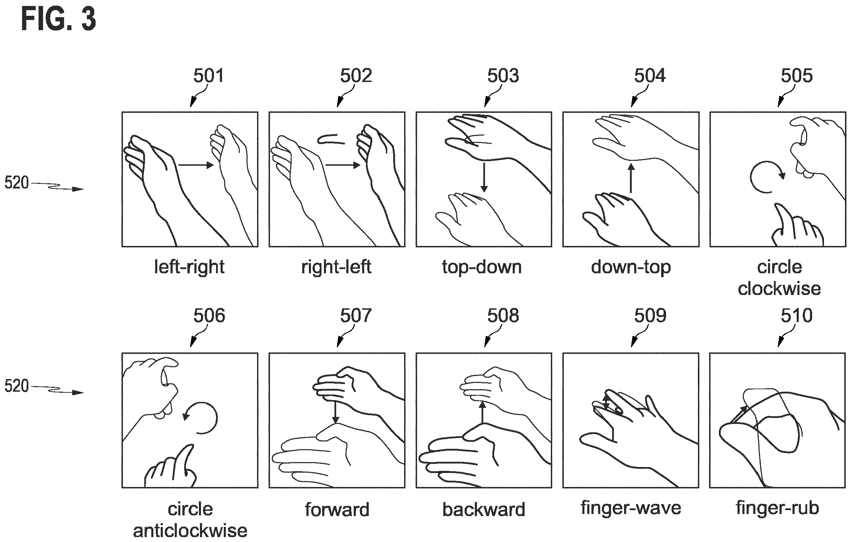

For instance, the objects 81-83 could pertain to three persons; for people counting applications, the task would be to determine that the scene includes three people. In another example, the objects 81, 82 may correspond to background, whereas the object 83 could pertain to a hand of a user - accordingly, the object 83 may be referred to as target or target object. Based on the radar measurements, gestures performed by the hand can be recognized. Some gestures are illustrated in FIG. 3 for illustrative purposes.

FIG. 3 schematically illustrates such gestures 501-510 and corresponding labels 115 of gesture classes 520, but other gestures are possible. According to the techniques described herein, it is possible to reliably and accurately classify the gestures 501-510. More generally speaking, according to various examples disclosed herein, it is possible to reliably and accurately make a classification prediction.

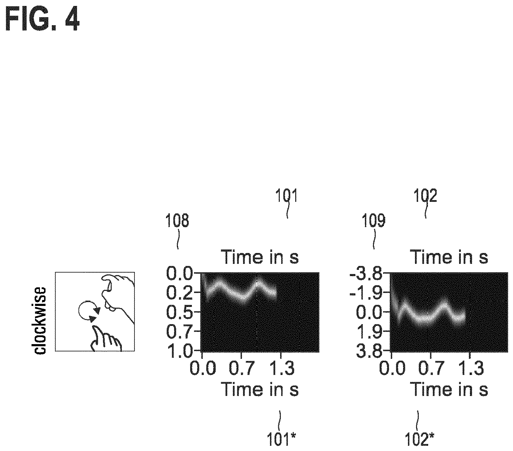

Generally, the classification prediction is based on one or more observables captured in the input data provided to the ML algorithm. Some observables are illustrated in connection with FIG. 4.

FIG. 4 schematically illustrates aspects with respect to two observables 108, 109 characterizing a certain gesture class - here a "circle motion" gesture, i.e., a rotational finger movement.

Illustrated is a 1-D time series 101. The time series 101 is indicative of a range 108 of the object. Also illustrated is a time series 102 that is indicative of a Doppler frequency shift 109 (or simply, Doppler frequency) of the object.

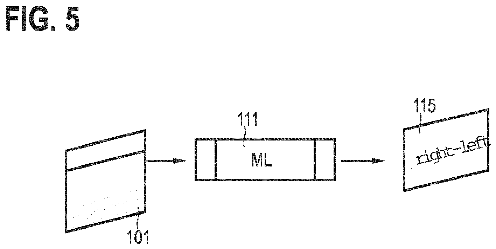

FIG. 5 schematically illustrates a processing pipeline for implementing the gesture classification. For instance, such processing may be implemented by the processor 62 upon loading program code from the memory 63.

As illustrated in FIG. 5, a classification ML algorithm 111 obtains an input feature vector 101. The input feature vector encodes respective observables of a radar measurement. The input feature vector thus corresponds to a representation of a radar measurement dataset. The input feature vector 101 can, e.g., correspond to a row-wise representation of an RDI.

The ML algorithm 11 then makes a classification prediction 115, e.g., indicates a specific gesture class or indicates the count of people.

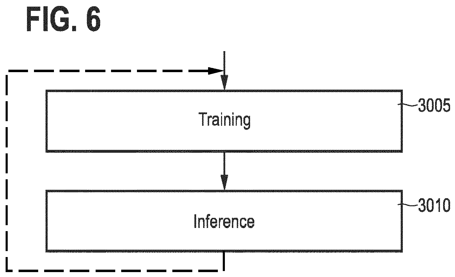

FIG. 6 is a flowchart of a method according to various examples. The method can be executed by at least one processor, e.g., upon loading program code from a memory. For instances, the method of FIG. 6 could be executed by the processor 72 and/or the processor 62 (cf. FIGs. 1 and 2).

Also, different boxes at FIG. 6 may be executed by different processing devices.

The method of FIG. 6 pertains to operation and maintenance of the classification algorithm 111.

At box 3005, a training phase of the classification algorithm 111 is implemented. Here, amongst other tasks, values of multiple parameters of the classification algorithm 111 are set, i.e., the training is performed. Weights of a NN can be adjusted.

The training can be based one or more loss values defined by a respective loss function. A loss value loss can be determined based on a difference between a prediction of the NN in its current training state and for a training feature vector of the training dataset and a corresponding ground-truth label of the training dataset

An iterative optimization can be implemented. Here, multiple sets can be used to adjust the weights in multiple iterations. Each iteration can include a backpropagation training algorithm to adjust the weights starting from an output layer of the NN towards an input layer.

Once the training of box 3005 has been completed, an inference phase can be implemented at box 3010. Here, a classification prediction is made, without a ground-truth label being available. The weights of the NN as determined in the training of box 3005 are used.

Based on the inference at box 3010, it would be possible to implement one or more applications. For instance, it would be possible to control an HMI. A machine may be controlled using the HMI. Access control may be provided.

As illustrated by the dashed arrow in FIG. 6, it is possible to execute another iteration of the training of box 3005, after inference at box 3010.

Specifically, one can re-train the ML algorithm once additional training datasets become available. For instance, one can retrain the ML algorithm once an additional training dataset becomes available through federated learning. Here, deployed sensors can provide training feature vectors of previously unseen scenes and one can thus generate ground-truth labels.

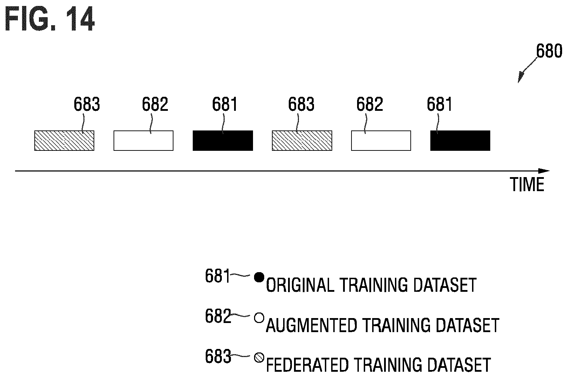

In some scenarios, it is possible to perform any retraining in subsequent iterations of box 3005 jointly based on one or more training datasets that have been previously used for training in a previous iteration of box 3005 and one or more additional training datasets that only become available in the new iteration of box 3005. In other words, a joint retraining based on previously available training datasets and newly available training datasets is possible (details with respect to such joint training will be disclosed in further detail in connection with FIG. 14). For instance, joint training based on an initial training dataset and a federated training dataset would be possible. Alternatively or additionally, joint training based on an initial training data set and an augmented training data set would be possible.

Such techniques are based on the finding that where retraining would only be executed based on newly available training datasets only (i.e., without considering any initial datasets), there is a risk that the overall accuracy of the ML algorithm does not increase or even decreases. Where retraining is only performed based on newly available training datasets, there is a risk that the ML algorithm forgets how to solve previous tasks. Thus, by such joint retraining, the overall accuracy can be increased.

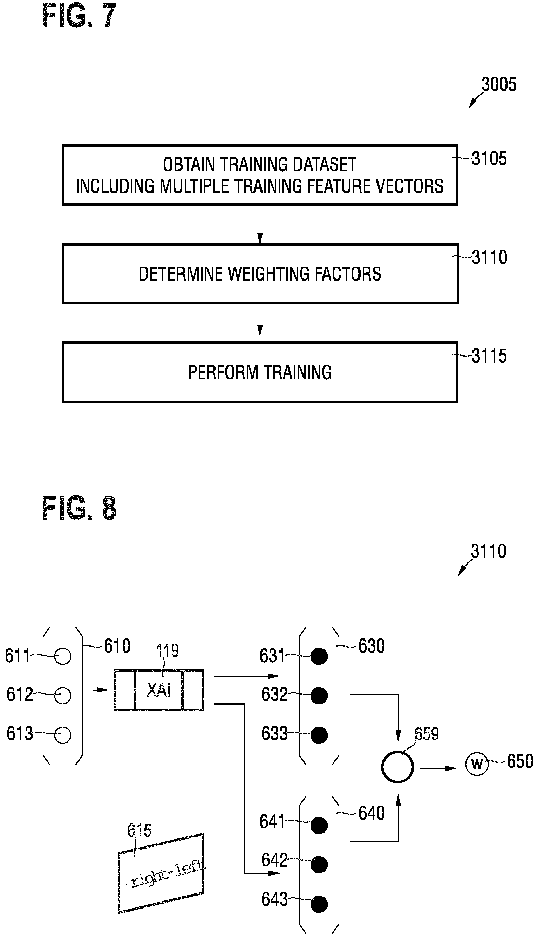

FIG. 7 is a flowchart of a method according to various examples.

The method of FIG. 7 can be executed by a processing device. For instance, the method of FIG. 7 could be executed by the processing device 60. The method of FIG. 7 could be executed by a cloud server. For instance, the method of FIG. 7 could be executed by the processor 62 upon loading program code from the memory 63 and upon executing the program code.

The method of FIG. 7 pertains to training a ML algorithm such as the ML algorithm 111 (cf. FIG. 5). As such, the method of FIG. 7 can implement box 3005.

The ML algorithm makes classification prediction based on radar measurement datasets. For instance, the ML algorithm can make classification predictions - e.g., people counting or gesture classification - based on RDIs or 2-D angular maps.

At box 3105, a training dataset is obtained. The training dataset includes training feature vectors and associated ground-truth labels. In other words, the training dataset includes pairs of training feature vectors in ground-truth labels. The ground-truth label specifies the intended output of the ML algorithm.

For instance, the training dataset can be loaded from a memory. The training dataset could be obtained from a database.

Ground-truth labels could be previously annotated by an expert. Ground-truth labels could be determined based on alternative measurement techniques, e.g., camera-based surveillance of a training scene, etc. The training dataset could be generated through simulation.

Next, at box 3110, weighting factors are determined for the training feature vectors; i.e., each training feature vector is assigned an associated weighting factor. The weighting factor specifies the impact of the particular pair of training feature vector and ground-truth label on the training of the ML algorithm. For instance, a larger (smaller) weighting factor, can amplify (suppress) the impact of the respective pair of training feature vector and ground-truth label on the adjustment of the parameters/weights of the ML algorithm due to that respective pair of training feature vector and ground-truth label.

The weighting factors are determined using an XAI analysis of the ML algorithm in its current training state.

As a general rule, the XAI analysis may provide meta-information on the performance of the ML algorithm. Different trainings states of the ML algorithm result in different meta-information.

Various options XAI analysis are available. For instance, Shapley values could be determined. Shapley values provide the additive influence of each feature value on the specific, local prediction of the ML algorithm. See, e.g., Lundberg, Scott M., and Su-In Lee. "A unified approach to interpreting model predictions." Advances in neural information processing systems 30 (2017) - the so-called SHAP method is an approximation of the Shapley values. Other options are available, see Ribeiro, Marco Tulio, Sameer Singh, and Carlos Guestrin. "" Why should I trust you?" Explaining the predictions of any classifier." Proceedings of the 22nd ACM SIGKDD international conference on knowledge discovery and data mining. 2016 - the so-called LIME method. Further techniques are disclosed here Chattopadhay, Aditya, et al. "Grad-cam++: Generalized gradient-based visual explanations for deep convolutional networks." 2018 IEEE winter conference on applications of computer vision (WACV). IEEE, 2018.

Then, next, at box 3115, the training of the ML algorithm can be performed, i.e., the weights can be adjusted. The training is performed based on loss values that are determined based on a difference between the respective classification predictions made by the ML algorithm in the current training state for each one of the multiple training feature vectors of the training dataset obtained at box 3105, as well as the ground-truth labels of the training dataset. Here, the loss value is obtained by weighting such difference using the respective weighting factors associated with each training feature vector.

Next, details with respect to determining the weighting factors at block 3110 will be disclosed. There are various options for determining the weighting factors at block 3110 and some options will be disclosed.

For instance, the XAI analysis may quantify the reliability of a prediction made by the ML algorithm in its current training state for a given input data. For instance, if the XAI analysis yields a low prediction reliability of the ML algorithm in its current training state for a given training feature vector, a large weight may be assigned to that training feature vector; on the other hand, if the XAI analysis yields a large prediction reliability of the ML algorithm in its current training state for a given training feature vector, a small weight may be assigned to that training feature vector.

In further scenarios it would be possible to consider the individual contributions to the prediction made by the ML algorithm associated with the individual feature values included in the training feature vectors. Accordingly, the determining of the weighting factor for each one of the multiple training feature vectors of a training dataset can include, for each one of the multiple training feature vectors, determining an associated feature relevance vector using the XAI analysis. The feature relevance vector can include feature relevance values indicative of a contribution of feature values of the respective training feature vector to the classification prediction made by the ML algorithm in the current training state.

Such feature relevance values can be determined for different classification predictions. Typically, the classification predictions output by a ML algorithm will include probabilities for different classes. Hence, there is one of the multiple candidate classes denoted as the most probable class (having the highest probability). The ground-truth label specifies one of the candidate classes as the true class observed. The true class may or may not be different than the most probable class.

Typically, the XAI analysis can output associated feature relevance vectors for each one of the candidate classes. According to examples, it is possible that the weighting factors are determined based on the feature relevance vectors associated with the training feature vectors and determined for the most probable class of the ML algorithm in the current training state. These feature relevance vectors can specify, by means of the feature relevance values, the relative contribution of each feature value of the associated training feature vector for the prediction of the most probable class made by the ML algorithm (i.e., which feature values have a positive or negative and/or high or low impact on the prediction of the ML algorithm of the most probable class).

There are different options for considering the feature relevance vectors. In a first option, it would be possible to consider the absolute value of the largest or smallest feature relevance value of each feature relevance vector, and then determine the weighting factor based thereon. Typically, the absolute value of the largest or smallest feature relevance value is indicative of strong local contributions of the feature values of the training feature vector onto the prediction made by the ML algorithm. Large absolute values in the feature relevance vectors indicate "hotspots" in the contribution to the prediction. It would be possible to assign comparatively large weighting factors to respective training feature vectors, in case the classification task is strongly affected by individual feature values. In a second option, it would be possible to consider a variance of the feature relevance values included in the feature relevance vectors. For instance, certain feature values can have a negative contribution to the prediction made by the ML algorithm, while other feature values have a positive contribution to the prediction made by the ML algorithm; this leads to the variance amongst the relevance values of the feature relevance vector. The larger the variance of the feature relevance values, the larger the respective weight. Specifically, the variance of the feature relevance vectors can be considered an indicator of the complexity of the classification task. This motivates assigning larger weights to the training of such complex classification tasks.

A third option for determining the weights based on the feature relevance vectors is illustrated in FIG. 8. The techniques associated with FIG. 8 can, accordingly, be employed as part of box 3110.

FIG. 8 schematically illustrates a processing pipeline for determining a weight 650 associated with a training feature vector 610. The training feature vector 610 includes multiple feature values 611, 612, 613 (in the illustrated example, the training feature vector 610 is 3 dimensional, but, generally, can have any dimensionality). For instance, the training feature vector 610 could represent a RDI.

The training feature vector 610 is processed in an XAI analysis 119. For instance, the Shapley values could be determined. Specifically, feature relevance vectors 630, 640 can be determined. The feature relevance vector 630 is associated with the most probable class predicted by the ML algorithm 111, i.e., the class of all candidate classes having the largest probability. The feature relevance vector 640, on the other hand, is associated with the ground-truth label 615, i.e., the true class. The feature relevance vector 630 includes feature relevance values 631, 632, 633; and the feature relevance vector 640 includes feature relevance vector 641, 642, 643.

For instance, the feature relevance values 631 is indicative of the marginal contribution of the feature values 611 to the prediction of the ML algorithm 111 corresponding to the most probable class. The feature relevance value 641 is indicative of the marginal contribution of the feature value 611 to the prediction of the ML algorithm 111 corresponding to the true class. Likewise, the relevance value 632 is associated with the feature value 612, and the relevance values 642 is associated with the feature value 612. The relevance value 633 is associated with the feature value 613; and the relevance values 643 is associated with the feature value 613.

In the illustrated example of FIG. 8, the weighting factor 650 associated with the training feature vector 610 is then determined based on a combination 659 of the feature relevance vector 630 with the feature relevance vector 640.

There are various options available for implement and the combination 659. For instance, it would be possible to determine the absolute value of a mean subtraction of the feature relevance vector 630 from the feature relevance vector 640 (or vice versa):

$$w = \left| \frac{1}{N} \sum_{i=1}^{N} M_{1i} - \frac{1}{N} \sum_{j=1}^{N} M_{2j} \right|$$

where $M_1$ denotes the feature relevance vector 630 and $M_2$ denotes the feature relevance vector 640 and $M_{1i}$ and $M_{2j}$ denote the respective relevance values. $N$ is the dimensionality (in the illustrated example 3-D).

It would also be possible to determine the absolute value of an IoU combination ("Intersection over Union" combination) of the feature relevance vectors 630, 640.

$$w = \sum_{i=1}^{N} |M_{1i} - M_{2i}|$$

Such techniques provide the advantage of considering deviations between the nominal protection for the true class and the actual prediction for the most probable class on feature level. Thereby, training feature vectors that show a significant deviation in the relative contribution of the individual feature values to the prediction of the (wrong) most probable class if compared to the prediction of the true class can be weighted more prominently in the training.

Next, aspects with respect to performing the training under consideration of the weighting factors are disclosed in connection with FIG. 9.

FIG. 9 schematically illustrates a processing pipeline for performing the training. FIG. 9 accordingly can be used to implement box 3115. As illustrated in FIG. 9, the ML 111 provides a prediction (i.e., the most probable class 115) based on the training feature vector 610. The most probable class 115 as compared to the ground-truth label 615 at 691. Based on this comparison, a loss value is calculated based on a respective loss function. This loss value can be weighted at 692 using the weight 650 and the weighted loss value 690 is then used for adjusting the weights of the ML algorithm 111. For instance, back propagation can be used to implement a gradient descent optimization.

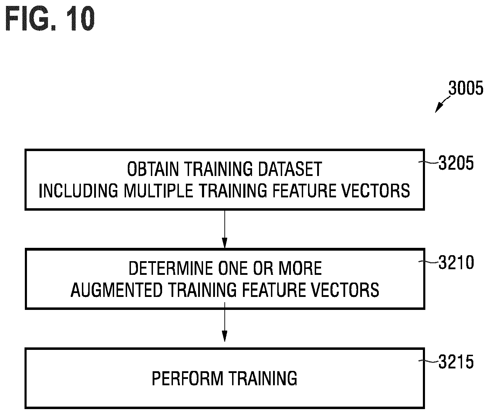

FIG. 10 is a flowchart of a method according to various examples. The method of FIG. 10 can be executed by a processing device. For instance, the method of FIG. 10 could be executed by the processing device 60. For instance, the method of FIG. 10 could be executed by the processor 62 upon loading program code from the memory 63 and upon executing the program code. The method of FIG. 10 pertains to training a ML algorithm such as the ML algorithm 111 (cf. FIG. 5). The ML algorithm makes classification predictions based on the radar measurement datasets. For instance, the ML algorithm can make classification predictions - e.g., people counting a gesture classification - based on RDIs or 2-D angular maps.

The method of FIG. 10 can be combined with the method of FIG. 7 .

Initially, at box 3205, a training dataset is obtained. Box 3205 corresponds to box 3105.

At box 3210, based on the multiple training feature vectors included in the training dataset, it is possible to determine an augmented training dataset. The augmented training dataset includes one or more augmented training feature vectors.

The augmented training dataset can be determined by applying, to the training feature vectors, at least one data transformation associated with a physical observable associated with the radar measurement dataset.

Then, at box 3215, the training of the ML algorithm is performed. Specifically, it would be possible to perform the training based on, both, the training dataset obtained at box 3205, as well as the augmented training dataset obtained at box 3210. A joint training is possible.

The training performed at box 3215 corresponds to the training performed at box 3115.

By determining the augmented training data set, additional training data becomes available. This helps to increase the overall accuracy of the ML algorithm in making the classification prediction. By applying the data transformation to the training feature vectors, new training feature vectors can be obtained for the augmented training dataset. Because the data transformation is associated with the physical observable that is associated with the radar measurement dataset, the input vector space of the feature vectors that are input to the ML algorithm can be additionally sampled. The data transformation corresponds to a shift in the position in the input vector space.

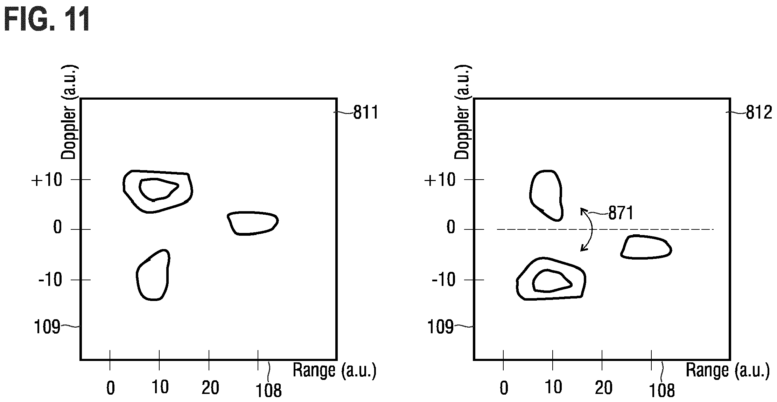

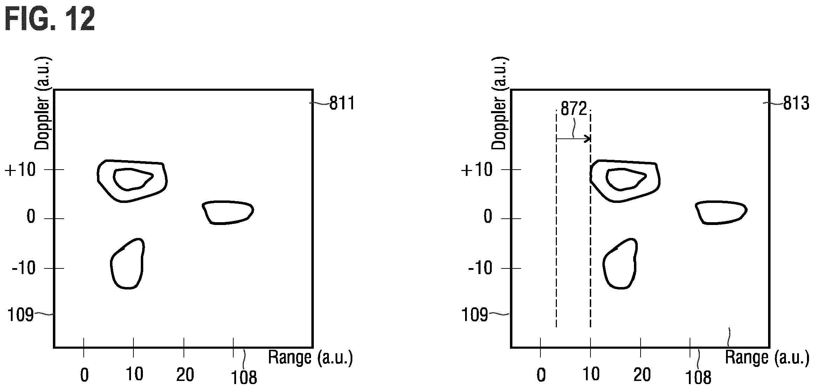

According to some examples, the ground-truth label can be invariant with respect to the data transformation. This means that the ground-truth label remains unaffected by the data transformation. Then, it is possible that the further ground-truth labels of the augmented training dataset correspond to the ground-truth labels of the training dataset. An example data transformation is illustrated in FIG. 11. FIG. 11, left illustrates the training feature vector, here specifically an RDI 811, of the initial training dataset obtained at box 3205. FIG. 11, right illustrates the augmented training feature vector, here specifically the corresponding RDI 812, of the augmented training dataset obtained at box 3210 and derived from the RDI 811. The data transformation includes a frequency-flip 871 of the Doppler observable (vertical axis in FIG. 11). For certain prediction tasks such a frequency flip 871 of the Doppler observable does not impact the predicted class, i.e., the ground-truth label would be invariant. An example would be the detection of a rotational finger movement (cf. FIG. 4) - if a distinction between a clockwise or counterclockwise movement is not made. If, on the other hand, a distinction between a clockwise and counterclockwise movement of the finger is being made, then the frequency flip 871 of the Doppler observable would impact the ground-truth label (change from clockwise to counterclockwise movement, or vice versa). Yet another example data transformation is illustrated in FIG. 12. FIG. 12, left illustrates the training feature vector, here specifically the RDI 811; also, FIG. 12, right illustrates the augmented training feature vector, here specifically the RDI 813, derived from the RDI 811. The data transformation - in the example of FIG. 12 - includes a shift 872 along the range observable 108. Such a shift 872 does not impact the predicted class, e.g., for a gesture detection task. This is because the gesture class - cf. FIG. 4 - does not depend on a distance between the sensor and the hand. Yet another example data transformation (not illustrated) can include the addition of Gaussian measurement noise to the training feature vectors. Respective techniques are generally disclosed in : Zheng, Stephan, et al. "Improving the robustness of deep neural networks via stability training." Proceedings of the IEEE conference on computer vision and pattern recognition. 2016 for image processing.

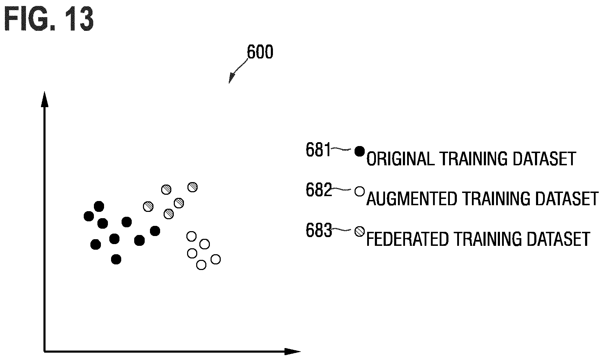

By such techniques of determining augmented training feature vectors, it is possible to obtain additional samples in the input vector space. This is illustrated in FIG. 13.

FIG. 13 schematically illustrates the input vector space 600 in which the input feature vectors are defined. FIG. 13 is a 2-D representation of the input vector space 600 which can be, generally, of higher dimensionality. FIG. 13 illustrates that certain regions of the input vector space 600 are sampled by the original training dataset 681 and other regions are sampled by the augmented training dataset 682, as obtained in boxes 3205 and 3210, respectively. Also, sometimes an additional federated training dataset 683 can be obtained. The training can then be based jointly on the available training datasets 681, 682, 683 to avoid catastrophic forgetting of the ML algorithm in different iterations of the training.

Details with respect to such joint training based on multiple training data sets are illustrated in connection with FIG. 14.

FIG. 14 illustrates a sequence 680 (or data stream) of multiple training dataset 681, 682, 683. While in the scenario of FIG. 14 these multiple training data sets comprise an initial/original training dataset, an augmented training dataset, and a federated training dataset, respectively, as a general rule, other combinations would be conceivable.

The joint training of the ML algorithm 111 is implemented by alternatingly providing training feature vectors as input to the ML algorithm 111 in the respective training state and updating the weights of the ML algorithm 111 accordingly (as, e.g., previously explained in connection with FIG. 9). The sequence 680 can define such alternated training based on different training feature vectors.

Summarizing, techniques have been disclosed that facilitate accurate training of a ML algorithm for classification tasks taking into consideration and XAI analysis.

In addition to more accurate training of the ML algorithm, the disclosed techniques can also improve transparency by creating human understandable justifications of the decision of the ML algorithm. Adversarial examples can be revealed. Also, trust in the prediction made by the ML algorithm can be increased by improving the confidence in the decision-making.

Techniques have been disclosed that explain why the ML algorithm provides a wrong prediction. This is based on and explains multiple artificial intelligence analysis. Based on such XAI analysis, the robustness of the ML algorithm can be improved by retraining.

Additionally, augmentation techniques for augmenting training datasets have been disclosed. A data transformation associated with the physical observable can be applied to a training feature vectors to obtain augmented training feature vectors. Examples include a frequency flip along the Doppler dimension, shifting along the range dimension, etc. Further, since radar measurement datasets are sensitive to noise, it is possible to add Gaussian noise to the training feature vectors. This helps to implement the ML algorithm in a particular robust manner.

To counteract catastrophic forgetting, incremental learning can be employed. After each inference step, whenever new training datasets become available, a joint retraining based on, both, initial training datasets as well as newly available training datasets is possible.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, techniques with respect to training a ML algorithm making a classification prediction have been disclosed in the framework of processing a radar measurement dataset that is based on a radar measurement. Specifically, techniques have been disclosed that use a RDIs as input to the ML algorithm. However, the techniques disclosed herein are not limited to a processing radar measurement datasets, let alone RDIs. Similar techniques may be readily applied to processing other kinds and types of input data. For instance, camera images may be processed.

**Claims**

1. A computer -implemented method of performing a training of a machine-learning algorithm (111) to make classification predictions (115) based on radar measurement datasets , the method comprising:

- obtaining (3105) a training dataset (681, 682, 683) comprising multiple training feature vectors (610, 811) and associated ground-truth labels (615), the multiple training feature vectors (610, 811) representing respective radar measurement datasets,

- determining (3110), for each one of the multiple training feature vectors (610, 811), a respective weighting factor (650) by employing an explainable artificial-intelligence analysis (119) of the machine-learning algorithm (111) in a current training state, and

- performing (3115) the training of the machine-learning algorithm (111) based on loss values (690) that are determined based on a difference (691) between respective classification predictions (115) made by the machine-learning algorithm (111) in the current training state for each one of the multiple training feature vectors (610, 811) and the ground-truth labels (615),

wherein the loss values (690) are weighted (692) using the respective weighting factors (650) associated with each training feature vector (610).

2.   The computer-implemented method of clam 1, wherein said determining (3110) of the respective weighting factor (650) for each one of the multiple training feature vectors (610, 811) comprises for each one of the multiple training feature vectors (610, 811):

   - determining, for the respective training feature vector (610, 811), an associated feature relevance vector (630) employing the explainable artificial-intelligence analysis (119), the respective associated feature relevance vector (630) comprising feature relevance values (631, 632, 633) indicative of a contribution of features (611, 612, 613) of the respective training feature vector (610, 811) to the classification prediction (115) made by the machine-learning algorithm (111) in the current training state and for a most probable class,

wherein the weighting factors (650) are determined based on the feature relevance vectors (630) associated with the training feature vectors (610, 811).

3.   The computer-implemented method of claim 2,

   wherein said determining (3110) of the respective weighting factor (650) for each one of the multiple training feature vectors (610, 811) comprises for each one of the multiple training feature vectors (610, 811):

      - determining, for the respective training feature vector (610, 811), an associated further feature relevance vector (640) using the explainable artificial-intelligence analysis (119), the respective associated further feature relevance vector (640) comprising further feature relevance values (641, 642, 643) indicative of a contribution of the features (611, 612, 613) of the respective training feature vector (610) to the classification prediction (115) made by the machine-learning algorithm (111) in the current training state and for a class indicated by the ground-truth label (615),

   wherein the weighting factors (650) are determined based on a combination (659) of the feature relevance vectors (630) with the respective further feature relevance vectors (640).

4.   The computer-implemented method of claim 3, wherein the combination (659) comprises an absolute value of a mean subtraction of the further feature relevance vector (640) from the feature relevance vector (630) or vice versa.

5.   The computer-implemented method of claim 3 or 4, wherein the combination (659) comprises an absolute value of an IoU combination of the feature relevance vector (630) and the further feature relevance vector (640).

6.   The computer-implemented method of any one of the preceding claims, further comprising:

      - based on the multiple training feature vectors (610, 811), determining (3210) an augmented training dataset (682) comprising one or more augmented training feature vectors (812, 813) by applying, to the training feature vectors (610, 811), at least one data transformation (871, 872) associated with a physical observable (108, 109),

   wherein the training of the machine-learning algorithm (111) is further performed based on the augmented training dataset (682).

7.   The computer-implemented method of claim 6,

      wherein the ground-truth label (615) is invariant with respect to the at least one data transformation (871, 872), wherein further ground-truth labels of the augmented training dataset (682) correspond to the respective ground-truth la-bels (615) of the training dataset (681).

8.   The computer-implemented method of claim 6 or 7,

wherein the at least one data transformation comprises a shift (872) of a range observable (108).

9. The computer-implemented method of any one of claims 6 to 8,
wherein the at least one data transformation comprises a frequency-flip (871) of a Doppler observable (109).

10. The computer-implemented method of any one of claims 6 to 9,
wherein the at least one data transformation comprises addition of Gaussian measurement noise.

11. The computer-implemented method of any one of claims 6 to 10,
wherein the training is performed jointly based on the training dataset (681) and the augmented training dataset (682) .

12. The computer-implemented method of any one of claims 6 to 11, further comprising:

- after performing the training of the machine-learning algorithm: obtaining a federated training dataset (683) comprising multiple federated training feature vectors and associated ground-truth labels, and
- performing a re-training of the machine-learning algorithm jointly based on the federated training dataset (683) and at least one of the training dataset (681) or the augmented training dataset (682)

13. A processing device configured for performing a training of a machine-learning algorithm (111) to make classification predictions (115) based on radar measurement datasets, the processing device comprising at least one processor configured to:

- obtain (3105) a training dataset (681, 682, 683) comprising multiple training feature vectors (610, 811) and associated ground-truth labels (615), the multiple training feature vectors (610, 811) representing respective radar measurement datasets,

- determine (3110), for each one of the multiple training feature vectors (610, 811), a respective weighting factor (650) by employing an explainable artificial-intelligence analysis (119) of the machine-learning algorithm (111) in a current training state, and
- perform (3115) the training of the machine-learning algorithm (111) based on loss values (690) that are determined based on a difference (691) between respective classification predictions (115) made by the machine-learning algorithm (111) in the current training state for each one of the multiple training feature vectors (610, 811) and the ground-truth labels (615),

wherein the loss values (690) are weighted (692) using the respective weighting factors (650) associated with each training feature vector (610).

14. The processing device of claim 13, wherein the at least one processor is configured to perform a method according to any one of claims 1 to 12.

# FIG. 1

~65

~70

Radar sensor

~64

~60

IF ~61

CPU ~62 ——— MEM ~63

# FIG. 2

FIG. 3

# FIG. 4

# FIG. 5

111

ML

115

right-left

101

# FIG. 6

```
┌──────────────────────────────┐
│                              │
│          Training            │──3005
│                              │
└──────────────────────────────┘
              │
              ▼
┌──────────────────────────────┐
│                              │
│          Inference           │──3010
│                              │
└──────────────────────────────┘
```

# FIG. 7

3005

```
┌────────────────────────────────────────────────┐
│              OBTAIN TRAINING DATASET            │─3105
│  INCLUDING MULTIPLE TRAINING FEATURE VECTORS    │
└────────────────────────────────────────────────┘
                        │
                        ▼
┌────────────────────────────────────────────────┐
│            DETERMINE WEIGHTING FACTORS          │─3110
└────────────────────────────────────────────────┘
                        │
                        ▼
┌────────────────────────────────────────────────┐
│                PERFORM TRAINING                 │─3115
└────────────────────────────────────────────────┘
```

# FIG. 8

3110

# FIG. 9

# FIG. 10

3005

| OBTAIN TRAINING DATASET INCLUDING MULTIPLE TRAINING FEATURE VECTORS | 3205 |

| DETERMINE ONE OR MORE AUGMENTED TRAINING FEATURE VECTORS | 3210 |

| PERFORM TRAINING | 3215 |

FIG. 11

FIG. 12

## FIG. 13

681 — ● ORIGINAL TRAINING DATASET

682 — ○ AUGMENTED TRAINING DATASET

683 — ◎ FEDERATED TRAINING DATASET

# FIG. 14

680

683 682 681 683 682 681

TIME

681 ● ORIGINAL TRAINING DATASET

682 ○ AUGMENTED TRAINING DATASET

683 ◎ FEDERATED TRAINING DATASET

Europäisches
Patentamt

European
Patent Office

Office européen
des brevets

# EUROPEAN SEARCH REPORT

Application Number

EP 22 18 6047

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ASTHANA SHUBHI ET AL: "Human-in-the-Loop Business Modelling for Emergent External Factors", 2020 IEEE INTERNATIONAL CONFERENCE ON BIG DATA (BIG DATA), IEEE, 10 December 2020 (2020-12-10), pages 3045-3051, XP033889677, DOI: 10.1109/BIGDATA50022.2020.9377743 [retrieved on 2021-03-12] * abstract * * page 3046 - page 3050 * | 1-14 | INV. G06N20/00 G06N5/04 |
| A | RUIWEN LI ET AL: "EDDA: Explanation-driven Data Augmentation to Improve Explanation Faithfulness", ARXIV.ORG, CORNELL UNIVERSITY LIBRARY, 201 OLIN LIBRARY CORNELL UNIVERSITY ITHACA, NY 14853, 24 September 2021 (2021-09-24), XP091046362, * the whole document * | 1-14 | |

TECHNICAL FIELDS
SEARCHED (IPC)

G06N

The present search report has been drawn up for all claims

| Place of search | Date of completion of the search | Examiner |
|---|---|---|
| The Hague | 9 December 2022 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Deep Learning Applications of Short-Range Radars. **SANTRA, A. ; HAZRA, S.** United Kingdom: Artech House. 2020
- **LUNDBERG, SCOTT M. ; SU-IN LEE.** A unified approach to interpreting model predictions. *Advances in neural information processing systems,* 2017, vol. 30
- **RIBEIRO, MARCO TULIO ; SAMEER SINGH ; CARLOS GUESTRIN.** Why should I trust you?'' Explaining the predictions of any classifier. *Proceedings of the 22nd ACM SIGKDD international conference on knowledge discovery and data mining,* 2016

- Grad-cam++: Generalized gradient-based visual explanations for deep convolutional networks. **CHATTOPADHAY, ADITYA et al.** 2018 IEEE winter conference on applications of computer vision (WACV). IEEE, 2018
- **ZHENG, STEPHAN et al.** Improving the robustness of deep neural networks via stability training. *Proceedings of the IEEE conference on computer vision and pattern recognition,* 2016